# EUROPÄISCHE PATENTSCHRIFT

(11) **EP 3 172 829 B1**
(45) Veröffentlichungstag und Bekanntmachung des Hinweises auf die Patenterteilung: **21.03.2018**
(21) Anmeldenummer: 15788357.0
(22) Anmeldetag: 23.10.2015
(51) Int. Cl.: H02P 21/14, H02P 6/18

(54) **VERFAHREN ZUM BESTIMMEN EINER ROTORFREQUENZ UND/ODER EINES ROTORWINKELS EINES ROTORS EINER RELUKTANZMASCHINE, STEUEREINRICHTUNG SOWIE ANTRIEBSANORDNUNG**
METHOD FOR DETERMINING A ROTOR FREQUENCY AND/OR A ROTOR ANGLE OF A ROTOR OF A RELUCTANCE MACHINE, CONTROL DEVICE AND DRIVE ASSEMBLY
PROCÉDÉ DE DÉTERMINATION D'UNE FRÉQUENCE DE ROTOR ET/OU D'UN ANGLE DE ROTOR D'UNE MACHINE À RÉLUCTANCE, DISPOSITIF DE COMMANDE ET ENTRAÎNEMENT

(30) Priorität: 31.10.2014 EP 14191318
(43) Veröffentlichungstag der Anmeldung: 31.05.2017
(73) Patentinhaber: Siemens Aktiengesellschaft, 80333 München (DE)
(72) Erfinder: SINNER, Harald, 90542 Eckental/Herpersdorf (DE); WEIGEL, Thilo, 90427 Nürnberg (DE)
(86) Internationale Anmeldenummer: PCT/EP2015/074612
(87) Internationale Veröffentlichungsnummer: WO 2016/066546

(56) Entgegenhaltungen:
- SCHROEDL M ET AL: "SENSORLESS CONTROL OF RELUCTANCE MACHINES AT ARBITRARY OPERATING CONDITIONS INCLUDING STANDSTILL", IEEE TRANSACTIONS ON POWER ELECTRONICS, INSTITUTE OF ELECTRICAL AND ELECTRONICS ENGINEERS, USA, Bd. 9, Nr. 2, 1. März 1994 (1994-03-01), Seiten 225-231, XP002065015, ISSN: 0885-8993, DOI: 10.1109/63.286816
- FEI R W: "Analysis of starting performance and frequency characteristics of synchronous reluctance motors", CONFERENCE RECORD OF THE 1996 IEEE INDUSTRY APPLICATIONS CONFERENCE - 31ST IAS ANNUAL MEETING, IEEE SERVICE CENTER, US, Bd. 2, 6. Oktober 1996 (1996-10-06), Seiten 761-768, XP010201385, DOI: 10.1109/IAS.1996.560171 ISBN: 978-0-7803-3544-8
- ALFREDO VAGATI ET AL: "Design of Low-Torque-Ripple Synchronous Reluctance Motors", IEEE TRANSACTIONS ON INDUSTRY APPLICATIONS, IEEE SERVICE CENTER, PISCATAWAY, NJ, US, Bd. 34, Nr. 4, 1. August 1998 (1998-08-01) , XP011022427, ISSN: 0093-9994

## Beschreibung

Die vorliegende Erfindung betrifft ein Verfahren zum Bestimmen einer Rotorfrequenz und/oder eines Rotorwinkels eines Rotors einer Reluktanzmaschine. Überdies betrifft die vorliegende Erfindung eine Steuereinrichtung für einen Umrichter einer Reluktanzmaschine. Schließlich betrifft die vorliegende Erfindung eine Antriebsanordnung.

Das Interesse richtet sich vorliegend auf Reluktanzmaschinen, insbesondere synchrone Reluktanzmaschinen ohne Dämpferkäfig. Derartige synchrone Reluktanzmaschinen ohne Dämpferkäfig weisen, sofern sie an einem Frequenzumrichter feldorientiert betrieben werden, einen speziell auch im Teillastbereich sehr guten Wirkungsgrad bei zugleich hoher verfügbarer Dynamik auf. Im Gegensatz zu Asynchronmaschinen existiert keine, den dynamischen Flussaufbau "störende" Rotorzeitkonstante, womit die synchrone Reluktanzmaschine den Vorzug bietet, im Teillastbereich bei abgesenktem Fluss äußerst energieeffizient zu fahren, zugleich aber eine Anforderung von hohem Lastmoment schnell zu magnetisieren. Den Vorteil im Wirkungsgrad erzielt die Reluktanzmaschine erstrangig durch den Wegfall der Rotorverluste, da dieser stationär synchron mit dem Stator-Drehfeld umläuft und über keinerlei Wicklungen verfügt. Im Vergleich zu einer permanenterregten Synchronmaschine sind vor allem die weitaus günstigeren Herstellungskosten der Maschine sowie die mögliche Kosteneinsparung beim Umrichterschutz attraktiv.

Steuereinrichtungen, die beispielsweise leistungsfähige Signalprozessoren aufweisen, bieten heute die Möglichkeit, die für die Reluktanzmaschine charakteristischen Nichtlinearitäten zu modellieren und die dadurch aufwendigen Algorithmen zu beherrschen. Nicht zuletzt aus diesem Grund erklärt sich das momentane Interesse der Industrie, die Vorzüge der synchronen Reluktanzmaschine in geeigneten Applikationen zu nutzen. Eines der favorisierten Applikationsfelder sind beispielsweise Antriebe für Pumpen oder Lüfter. Diese werden in der Regel drehzahlgeregelt betrieben und haben ausgedehnte Laufzeiten, wodurch sich ein hohes Energiesparpotenzial ergibt. Derartige Reluktanzmaschinen sind aus Kostengründen in den meisten Fällen ohne einen Sensor, der die Drehzahl- und/oder Kommutierungslage messen kann, konfiguriert. Speziell bei Lüftern ist es notwendig, auf die drehende Reluktanzmaschine zuzuschalten, den Antrieb quasi "abzuholen" und auf die vorgegebene Förderleistung zurückzufahren. Beim Zuschalten auf die drehende bzw. rotierende synchrone Reluktanzmaschine muss der Umrichter dreh- und phasenrichtig zur Rotorlage aufsetzen. Im Gegensatz zur permanenterregten Synchronmaschine besteht der Rotor nur aus Eisen (und Luft), wodurch die übliche Auswertung von Drehzahl und Phase mittels Messung der elektromotorischen Kraft nicht möglich ist.

Für das Zuschalten auf drehende Asynchronmaschinen und permanenterregte Synchronmaschinen ohne Drehzahl- und Lagesensor existieren diverse Verfahren. Bei Asynchronmaschinen ist die Identifikation der Drehzahl ausreichend, da die Phase kein Maschinenparameter ist. Hierzu kann beispielsweise ein Strom bei einer vorgegebenen variierenden Suchfrequenz eingeprägt werden. Die Suche startet in der Regel bei einer Maximalfrequenz und läuft gegen Null. Die zu identifizierende Drehzahl der Maschine liegt im Punkt der Maximalspannung. Weiterhin kann ein vollständiges Maschinenmodell, beispielsweise in Form eines Observers genutzt werden. Diese haben einen großen Einzugsbereich und schwingen auf die Maschinenfrequenz ein, wenn sie mit der realen Maschinenspannung versorgt werden. Bei permanenterregten Synchronmaschinen bedarf es der Bestimmung der Drehzahl und der Phase. Hierzu kann beispielsweise die elektromotorische Kraft, welche die Drehzahl und die Phasen des Rotors widerspiegelt, gemessen werden. Zudem kann ein Testpulsverfahren verwendet werden, bei dem eine Sequenz von Nullzeigern und Pulssperren erzeugt wird und die induzierten Pulsströme ausgewertet werden.

Alternativ zu den hier beschriebenen Verfahren wäre bei einer synchronen Reluktanzmaschine auch ein Verfahren möglich, bei welchem wie auch bei einer Asynchronmaschine Beobachter verwendet werden, die über einen großen Einzugsbereich verfügen und von einem vorgegebenen Startwert in Phase und Winkel einschwingen.

Hierzu beschreibt die Veröffentlichung "Sensorless Control of Reluctance Machines at Arbitrary Operating Conditions Including Standstill" von M. Schroedel et al., IEEE Transactions on Power Electronics, Vol. 9, No. 2, 1994 ein Verfahren zum Bestimmen eines Rotorwinkels einer Reluktanzmaschine. Hierzu können unterschiedliche Spannungszeiger bereitgestellt werden, um die Reaktanzen in der d- und q-Achse zu bestimmen.

Es ist Aufgabe der vorliegenden Erfindung, eine Lösung aufzuzeigen, wie eine Reluktanzmaschine zuverlässiger betrieben werden kann.

Diese Aufgabe wird durch ein Verfahren, durch eine Steuereinrichtung sowie durch eine Antriebsanordnung gemäß den jeweiligen unabhängigen Patentansprüchen gelöst. Vorteilhafte Ausführungen der vorliegenden Erfindung sind Gegenstand der abhängigen Ansprüche.

Ein erfindungsgemäßes Verfahren dient zum Bestimmen einer Rotorfrequenz und/oder eines Rotorwinkels eines Rotors einer Reluktanzmaschine, wobei die Reluktanzmaschine einen Stator mit einer Statorwicklung und den Rotor mit einem magnetisch anisotropen Rotorpaket aufweist. Das Verfahren umfasst das Anlegen einer zeitlichen Sequenz von Spannungspulsen an der Statorwicklung, das Bestimmen der resultierenden zeitlichen Antwortsequenz des in der Statorwicklung fließenden elektrischen Stroms, welcher durch eine in Folge der Spannungspulse erzeugte Sequenz eines magnetischen Flusses in Wechselwirkung mit dem magnetisch anisotropen Rotorpaket entsteht, und das Bestimmen der Rotorfrequenz und/oder des Rotorwinkels anhand der bestimmten zeitlichen Antwortsequenz des elektrischen Stroms mittels einer Steuereinrichtung. Ferner werden zum Anlegen der zeitlichen Sequenz von Spannungspulsen mit einem Frequenzumrichter in sequentieller Wiederholung jeweils abwechselnd ein Spannungswert von festem Betrag und fester Richtung und eine Pulssperre ausgegeben.

Die Reluktanzmaschine ist insbesondere als synchrone Reluktanzmaschine ohne Dämpferkäfig ausgebildet. Der Stator der Reluktanzmaschine weist insbesondere eine 3-Phasen-Drehstromwicklung auf. Der Rotor besteht aus einem magnetisch anisotropen Aufbau, insbesondere kann der Rotor entsprechende Flusssperrelemente, also luftgefüllte Bereiche, aufweisen, die derart angeordnet sind, dass ein richtungsabhängiger magnetischer Leitwert resultiert.

An der Statorwicklung wird eine zeitliche Sequenz von Spannungspulsen angelegt. Beispielsweise kann dazu mit einem Frequenzumrichter in sequentieller Wiederholung jeweils abwechselnd ein Spannungswert von festem Betrag und fester Richtung und eine Pulssperre ausgegeben werden. In Folge der elektrischen Spannung bildet sich ein zeitlich veränderlicher magnetischer Fluss aus. Dieser zeitlich veränderliche magnetische Fluss führt infolge des magnetisch anisotropen Rotorpaketes nun zu einer vom Winkel des Rotors abhängigen Antwortsequenz des Stroms. Diese ist insbesondere mit einer Information des Rotorlagewinkels bzw. des Rotorwinkels moduliert.

Dem liegt die Erkenntnis zugrunde, dass bei der vorhandenen magnetischen Anisotropie des Rotorpakets ein relativ zum Rotor auf einer Kreistrajektorie fortschreitender Flussraumzeiger allgemein zu einer verzerrten elliptischen Trajektorie eines Stromraumzeigers bzw. Stromzeigers führt. Dieser Stromraumzeiger kann anhand des zeitlichen Verlaufs der elektrischen Stromstärke bestimmt werden. Der zeitliche Verlauf der elektrischen Stromstärke kann beispielsweise mit einem Stromsensor erfasst werden. Die Steuereinrichtung kann beispielsweise dazu ausgelegt sein, anhand des gemessenen elektrischen Stroms den Stromraumzeiger zu bestimmen. Anhand der Geometrie des Rotorpakets und/oder der bestimmten elektrischen Stromstärke können dann die Rotorfrequenz des Rotors und/oder der Rotorwinkel bestimmt werden.

Zudem wird die Rotorfrequenz und/oder der Rotorwinkel anhand der Sequenz einer Gegensystemkomponente des elektrischen Stroms bestimmt, welche den Anteil des elektrischen Stroms beschreibt, welcher sich in Abhängigkeit von dem Rotorwinkel ändert. Des Weiteren wird zum Bestimmen der Rotorfrequenz und/oder des Rotorwinkels eine Mitsystemkomponente des elektrischen Stroms bestimmt, welche den Anteil des elektrischen Stroms beschreibt, bei welchem eine Änderung in Abhängigkeit vom Rotorwinkel unterbleibt.

Die in Rotorkoordinaten resultierende elliptische Bahn der Stromtrajektorie resultiert aus der Überlagerung einer Mitsystemkomponente und einer Gegensystemkomponente. Die Mitsystemkomponente des Stroms ist stets in Richtung des Flusses gerichtet. Die Gegensystemkomponente des Stroms beinhaltet die Information des Rotorwinkels und ermöglicht daher die Bestimmung von Rotorfrequenz und/oder des Rotorwinkels.

Statorfest betrachtet, und damit aus Sicht des statorfest stehenden Flusszeigers, erscheint die Mitsystemkomponente des Stroms als Gleichgrößenzeiger bzw. Offsetverschiebung in Richtung des Flusses. Die Gegensystemkomponente des Stroms erscheint als umlaufender Zeiger, und dreht mit doppelter Rotorfrequenz in Drehrichtung des fortschreitenden Rotorwinkels auf einer Kreistrajektorie. Die Überlagerung beider Komponenten resultiert in einer Kreistrajektorie mit Offsetverschiebung. Die Offsetverschiebung ist neben den Motorparametern abhängig von der Ansteuerungsamplitude und kann bei bekannten Motorparametern entweder berechnet oder bei unbekannten Motorparametern ausgemessen werden. Mit bekannter Offsetverschiebung kann somit aus der gemessenen Sequenz des Stroms nach Abzug der Offsetverschiebung der Rotorwinkel und/oder die Rotorfrequenz aus der verbleibenden Sequenz der Gegensystemkomponente bestimmt werden.

In einer Ausführungsform wird zum Bestimmen der Rotorfrequenz und/oder des Rotorwinkels eine Phase und/oder eine Frequenz des elektrischen Stroms mittels einer Phasenregelschleife der Steuereinrichtung aufbereitet. Eine derartige Phasenregelschleife wird als Phase-Locked-Loop (PLL) bezeichnet. Die hohe Signalgüte am Ausgang der Phasenregelschleife ermöglicht damit die direkte Bestimmung der Rotorfrequenz und/oder des Rotorwinkels in hoher Qualität.

In einer weiteren Ausführungsform beinhaltet die Steuereinrichtung zumindest einen Zähler und/oder einen Detektor, insbesondere einen Peak-Detektor, mittels welchem eine Anzahl von Maxima des bestimmten elektrischen Stroms und/oder ein zeitlicher Abstand zwischen zumindest zwei benachbarten Maxima des zeitlichen Verlaufs des elektrischen Stroms bestimmt wird. Ein entsprechender Zähler bzw. Counter kann auch dazu dienen, die Zeit zwischen den Strom-Nulldurchgängen des elektrischen Stroms zu bestimmen. Anhand der zeitlichen Lage der Maxima kann beispielsweise der Rotorwinkel bestimmt werden. Anhand des Abstands zwischen zumindest zwei benachbarten Maxima kann die Rotorfrequenz bzw. die Drehzahl des Rotors auf einfache Weise ermittelt werden.

In einer Ausführungsform wird die Rotorfrequenz und/oder der Rotorwinkel bei dem stehenden Rotor oder bei dem sich relativ zu Stator drehenden Rotor bestimmt. Das Verfahren zeichnet sich dadurch aus, dass die Rotorfrequenz und/oder der Rotorwinkel sowohl bei stehendem Rotor als auch bei drehendem Rotor durchgeführt werden kann. Somit können die Rotorfrequenz und/oder der Rotorwinkel unabhängig von dem aktuellen Betriebszustand der Reluktanzmaschine bestimmt werden.

In einer Ausgestaltung wird ein Umrichter in Abhängigkeit von der bestimmten Rotorfrequenz und/oder des Rotorwinkels auf die Reluktanzmaschine zugeschaltet. Anhand der bestimmten Rotorfrequenz und/oder des bestimmten Rotorwinkels kann das Zuschalten des Umrichters auf die rotierende Reluktanzmaschine erfolgen. Somit kann der Umrichter auf einfache und zuverlässige Weise drehzahl- und phasenrichtig mit der Reluktanzmaschine elektrisch verbunden werden.

Eine erfindungsgemäße Steuereinrichtung für einen Umrichter einer Reluktanzmaschine ist dazu ausgelegt, ein erfindungsgemäßes Verfahren durchzuführen. Eine solche Steuereinrichtung kann beispielsweise einen entsprechenden Signalprozessor umfassen. Auf der Steuereinrichtung kann ein entsprechender Regelungscode ablaufen. Somit kann auf einfache und kostengünstige Weise eine Steuereinrichtung für einen Umrichter einer Reluktanzmaschine bereitgestellt werden.

Eine erfindungsgemäße Antriebsanordnung umfasst eine Reluktanzmaschine, einen Umrichter, der mit der Reluktanzmaschine elektrisch verbunden ist, und eine erfindungsgemäße Steuereinrichtung zum Ansteuern des Umrichters. Die Reluktanzmaschine ist insbesondere als synchrone Reluktanzmaschine ohne Dämpferkäfig ausgebildet. Der Umrichter kann insbesondere als Frequenzumrichter ausgebildet sein. Eine derartige Antriebsanordnung kann beispielsweise für Pumpen oder für Lüfter verwendet werden.

Die mit Bezug auf das erfindungsgemäße Verfahren vorgestellten bevorzugten Ausführungsformen und deren Vorteile gelten entsprechend für die erfindungsgemäße Steuereinrichtung sowie für die erfindungsgemäße Antriebsanordnung.

Weitere Merkmale der Erfindung ergeben sich aus den Ansprüchen, den Figuren und der Figurenbeschreibung. Alle vorstehend in der Beschreibung genannten und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert. Es zeigen:
- FIG 1: ein Rotorkoordinatensystem einer Reluktanzmaschine, in dem ein Stromzeiger und ein Flusszeiger sowie deren Trajektorien dargestellt sind;
- FIG 2: ein Statorkoordinatensystem der Reluktanzmaschine, in dem der Stromzeiger und der Flusszeiger sowie deren Trajektorien dargestellt sind;
- FIG 3: das Statorkoordinatensystem, in dem Messwerte für den elektrischen Strom eingetragen sind;
- FIG 4: das Statorkoordinatensystem und das Rotorkoordinatensystem der Reluktanzmaschine;
- FIG 5: eine Auswerteeinrichtung einer Antriebsanordnung;
- FIG 6: die Antriebsanordnung mit der Reluktanzmaschine, einem Umrichter, einer Messeinrichtung und der Steuereinrichtung; und
- FIG 7: die Antriebsanordnung gemäß FIG 6 in einer weiteren Ausführungsform.

Vorliegend soll eine Rotorfrequenz f und/oder ein Rotorwinkel ϕ einer Reluktanzmaschine 2 bestimmt werden. Die Reluktanzmaschine 2 ist insbesondere als synchrone Reluktanzmaschine ohne Dämpferkäfig ausgebildet. Die Reluktanzmaschine 2 weist einen vorliegend nicht dargestellten Stator mit entsprechenden Statorwicklungen 10 auf. Zudem weist die Reluktanzmaschine 2 einen hier nicht dargestellten Rotor auf, der ein Rotorpaket aufweist, das magnetisch anisotrop ausgebildet ist. Das Rotorpaket kann aus einem Blechpaket gebildet sein und entsprechende Flusssperrelemente - also Luft gefüllte Bereiche bzw. Aussparungen - aufweisen, wodurch sich die magnetisch anisotrope Ausgestaltung ergibt. Anhand der bestimmten Rotorfrequenz f und/oder anhand des bestimmten Rotorwinkels ϕ kann insbesondere ein Umrichter 6 mit der rotierenden Reluktanzmaschine 2 drehzahl- und phasenrichtig verbunden werden.

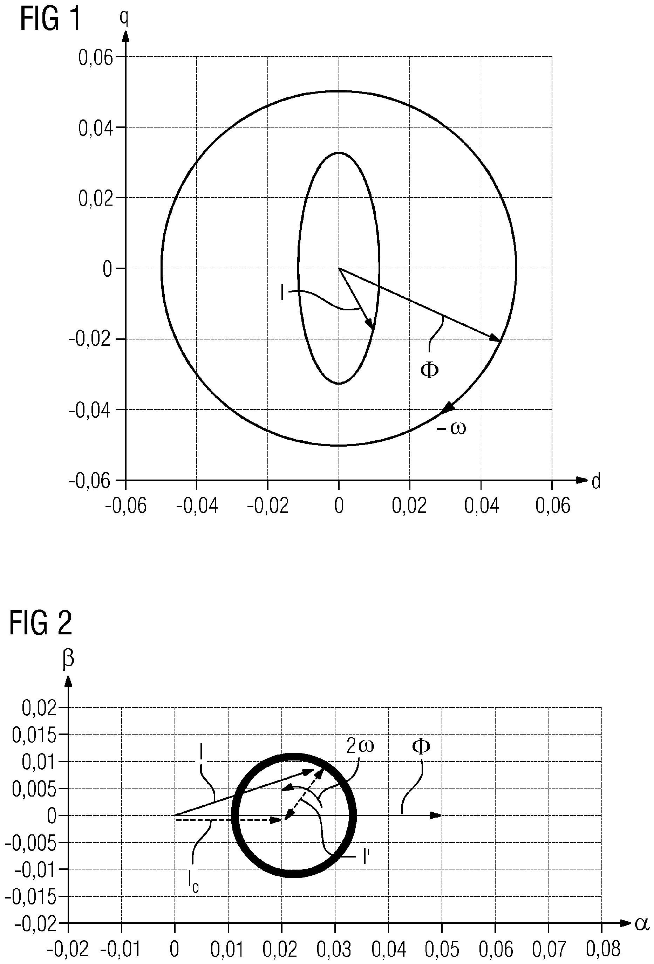

In FIG 1 ist ein Rotorkoordinatensystem gezeigt, dass die Achse d und die Achse q aufweist. In dem Rotorkoordinatensystem werden physikalische Größen der Reluktanzmaschine 2 als Zeiger in der komplexen Ebene dargestellt. Die Achse d zeigt den reellen Anteil des Rotorkoordinatensystems und in die Richtung des großen magnetischen Leitwertes. Die Achse q zeigt den imaginären Anteil des Rotorkoordinatensystems und in die Richtung des kleinen magnetischen Leitwertes. In dem vorliegenden Ausführungsbeispiel dreht sich der Rotor mit der Frequenz ω. In dem Rotorkoordinatensystem ist ein magnetischer Fluss Φ als Flusszeiger eingezeichnet. Der Flusszeiger sei statorfest stehend eingeprägt. Im Rotorkoordinatensystem erscheint der Fluss Φ bzw. der Flusszeiger bei idealer linearer Betrachtung mit der Frequenz -ω umlaufend auf einer kreisförmigen Trajektorie.

Durch den Fluss Φ wird in der Statorwicklung 10 ein elektrischer Strom I bewirkt. Der Rotor der Reluktanzmaschine 2 bzw. dessen Rotorpaket weist eine magnetische Anisotropie auf, der Rotor weist also einen richtungsabhängigen magnetischen Leitwert auf. Aufgrund dieser Eigenschaft bewirkt ein relativ zum Rotor auf einer Kreistrajektorie fortschreitender eingeprägter Fluss Φ eine entsprechende Bahn eines Stromzeigers, der den elektrischen Strom I beschreibt. Die Bahn des Stroms I bzw. des Stromzeigers ergibt sich aus der geometrischen Ausgestaltung bzw. aus der magnetischen Anisotropie des Rotorpakets. In dem vorliegenden Ausführungsbeispiel resultiert in Betrachtung des Rotorsystems eine elliptische Bahn des Stromzeigers.

FIG 2 zeigt nun die Verläufe gemäß FIG 1 aus der Perspektive des Flusszeigers, also im Statorkoordinatensystem. Das Statorkoordinatensystem weist die Achse α und die Achse β auf. Die Achse α zeigt den reellen Anteil und die Achse β zeigt den imaginären Anteil des Statorkoordinatensystems. Der Flusszeiger bzw. der Fluss Φ erscheint vorliegend stehend. Der Stromzeiger, der den elektrischen Strom I beschreibt, ist in eine Mitsystemkomponente I₀ und eine Gegensystemkomponente I' zerlegbar. Die Mitsystemkomponente I₀ steht in Phase zum Fluss Φ. Die Gegensystemkomponente I' dreht in die Richtung des laufenden Rotors mit der doppelten Frequenz 2ω. Die zeitliche Änderung des elektrischen Stroms I ergibt sich aus der zeitlichen Änderung der Gegensystemkomponente I'.

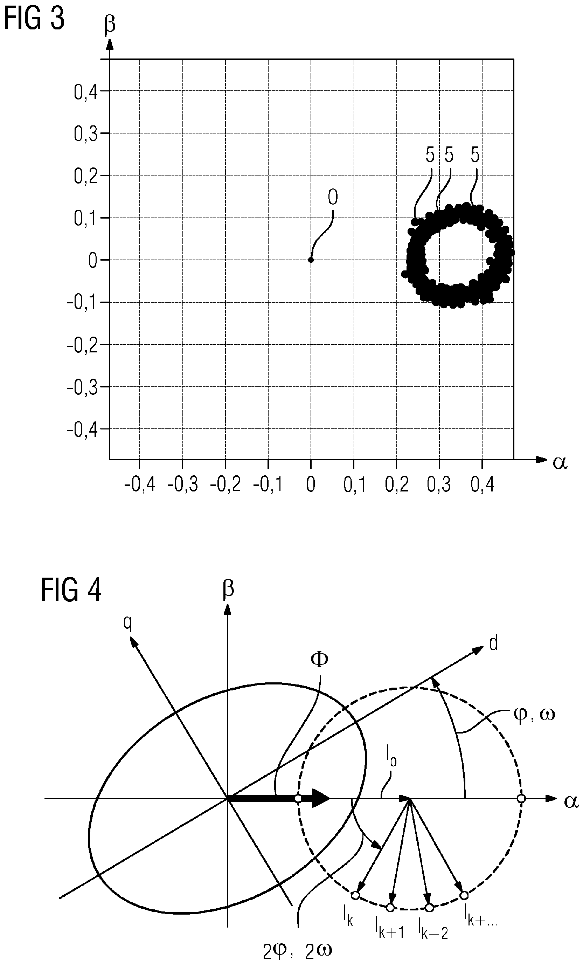

FIG 3 zeigt eine Sequenz von Messwerten 5 für den elektrischen Strom I in dem Statorkoordinatensystem. In der Reluktanzmaschine 2 wird der Fluss Φ beispielsweise als hochfrequente sequentielle Impulskette {Φₖ} mit konstanter Richtung erzeugt. Vorliegend wird die Notation der geschweiften Klammern genutzt, um eine Sequenz zu beschreiben. Dazu wird mit einem Frequenzumrichter in sequentieller Wiederholung jeweils abwechselnd ein Spannungswert von festem Betrag und fester Richtung und eine Pulssperre ausgegeben {Uₖ, Zₖ}. Bei anliegender Spannung Uₖ wird der Flusszeiger aufgebaut, im Folgetakt wird bei applizierter Pulssperre Zₖ der Flusszeiger wieder abgebaut. In sequentieller Wiederholung wird somit auf diese Weise die erforderliche Impulskette für den Fluss {Φₖ} quasi in die Maschine geschossen.

Ein Abbild der daraus resultierenden Statorstrom-Impulskette {Iₖ} ist anhand der Messwerte 5 gezeigt. Die Messwerte 5 bilden in dem Statorkoordinatensystem eine Kreistrajektorie mit Offsetverschiebung I₀ zum Ursprung O. Die Offsetverschiebung resultiert aus der Mitsystemkomponente I₀ des elektrischen Stroms Iₖ. Die enthaltene Kreistrajektorie resultiert aus der Gegensystemkomponente I' und enthält die Information des Rotorwinkels ϕ. Bei bekannter Mitsystemkomponente I₀ bzw. Offsetverschiebung kann somit aus den Messwerten 5 des Stroms {Iₖ} nach Abzug von I₀ der Rotorwinkel ϕ und/oder die Rotorfrequenz f bestimmt werden.

Die Offsetverschiebung kann bei bekannten Motorparametern zuvor entweder berechnet, oder ohne Kenntnis von Motorparametern, durch arithmetisches Mitteln der Messwerte 5 zuvor bestimmt werden. Alternativ kann eine Bestimmung zuvor durch Bilden des Mittelwertes aus Minimalbetrag und Maximalbetrag der Messwerte 5 erfolgen.

FIG 4 zeigt eine Raumzeigerdarstellung der Reluktanzmaschine 2. Die Raumzeigerdarstellung umfasst das Statorkoordinatensystem und das zum Statorkoordinatensystem rotierende Rotorkoordinatensystem. Hier ist zu erkennen, dass durch die Abfolge von Spannungsimpulsen {Uₖ, Zₖ} ein Fluss Φ bzw. ein Flusszeiger erzeugt wird, der statorfest ist und bezüglich der Achse α, eine feste Richtung aufweist. Durch die Spannungsimpulse {Uₖ, Zₖ} ergibt sich eine Sequenz von Stromzeigern {Iₖ} deren Werte Iₖ, Iₖ₊₁, Iₖ₊₂ auf einem Kreis mit Offsetverschiebung liegen. Die Sequenz der Gegensystemkomponente {I'ₖ} = {Iₖ} - I₀, die nach Abzug des Offsets I₀ von {Iₖ} entsteht und in der Abbildung durch die Verbindungszeiger von I₀ zu den Werten Iₖ eingezeichnet ist, beinhaltet wie gezeigt die Information des doppelten Rotorwinkels ϕ respektive die Information der doppelten Rotorfrequenz f.

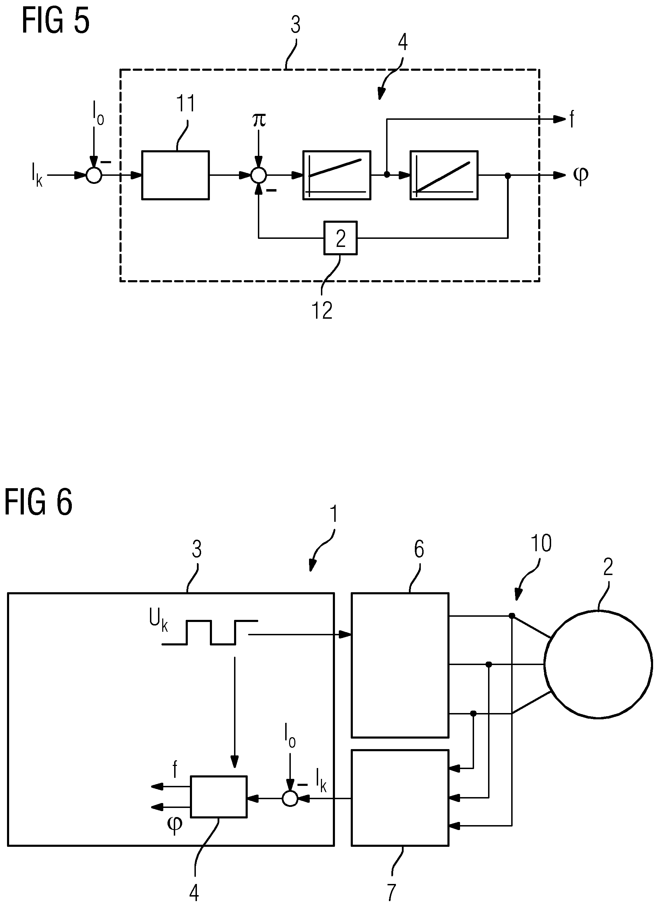

FIG 5 zeigt eine schematische Darstellung einer Auswerteeinrichtung 3 zum Bestimmen der Rotorfrequenz f und/oder eines Rotorwinkels ϕ. Der Auswerteeinrichtung 3 wird die zeitliche Antwortsequenz des elektrischen Stroms {Iₖ} zugeführt, der beispielsweise mit einem Stromsensor 7 erfasst wird. Zudem wird die Offsetverschiebung I₀ von dem elektrischen Strom {Iₖ} abgezogen. Somit wird die Sequenz der Gegensystemkomponente {I'ₖ} des elektrischen Stroms {Iₖ} einer Phasenregelschleife 4 zugeführt. Die Phasenregelschleife 4 wird insbesondere mit der Frequenz des Spannungssignals {Uₖ} getaktet. Mit einer Einrichtung 11 kann das Winkelargument des zeitlichen Verlaufs der Gegensystemkomponente {I'ₖ} bestimmt werden. Ferner wird ein Offsetwinkel Π zu dem Winkelargument hinzuaddiert. Zudem wird mit der Einrichtung 12 eine Untersetzung des Stromwinkels und der Stromfrequenz um den Faktor 2 durchgeführt. Mit der Phasenregelschleife 4 kann das die Rotorfrequenz f und der Rotorwinkel ϕ bestimmt werden.

FIG 6 zeigt eine Antriebsanordnung 1 in einer ersten Ausführungsform. Die Antriebsanordnung 1 umfasst die Reluktanzmaschine 2. Darüber hinaus umfasst die Antriebsanordnung 1 die Steuereinrichtung 3. Ferner umfasst die Antriebsanordnung 1 den Umrichter 6, der insbesondere als Frequenzumrichter ausgebildet ist. Der Umrichter 6 ist elektrisch mit der Statorwicklung 11 verbunden. In dem vorliegenden Ausführungsbeispiel weist die Statorwicklung 11 drei Phasen auf. In die Statorwicklung 11 werden nun die Spannungspulse Uₖ eingeprägt. Diese bewirken den elektrischen Strom I in der Statorwicklung 10, welcher mit dem Stromsensor 7 erfasst wird.

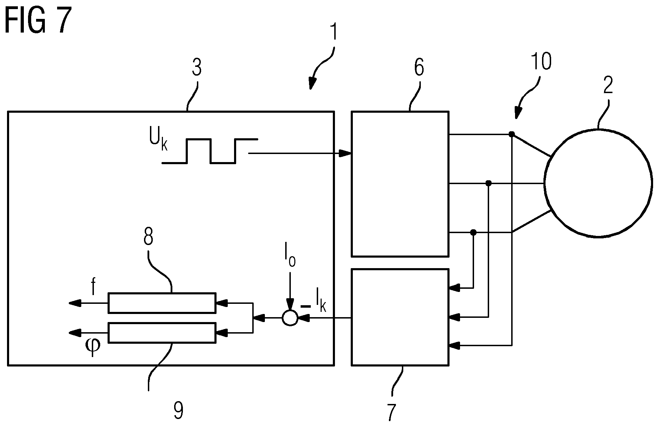

FIG 7 zeigt die Antriebsanordnung 1 in einer weiteren Ausführungsform. Anstelle der Phasenregelschleife 4 ist ein entsprechender Zähler 8 vorgesehen, der die Zeit zwischen den Nulldurchgängen des zeitlichen Verlaufs des elektrischen Stroms I bestimmen kann und somit die Rotorfrequenz f bestimmen kann. Weiterhin ist ein Detektor 9, insbesondere in Max/Min-Detektor vorgesehen, der anhand der Maximalwerte des elektrischen Stroms I den Rotorwinkel ϕ bzw. die Phase bestimmen kann.

Mit den Antriebsanordnungen 1 gemäß den FIG 6 und 7 kann die Rotorfrequenz f und der Rotorwinkel ϕ zuverlässig bestimmt werden. Beispielsweise kann mit einer Frequenz der Spannung Uₖ, die 1 kHz beträgt, bei einer Identifikationsdauer von 50 ms eine Rotorfrequenz f von 0 Hz bis etwa ± 100 Hz bestimmt werden. Bei einer höheren Frequenz kann die Leistungsfähigkeit erhöht werden.

Aufgrund der geringen Signalenergie ist das Verfahren zum Bestimmen der Rotorfrequenz f und/oder des Rotorwinkels ϕ quasi geräuschlos und drehmomentfrei. Ferner kann der Umrichter 6 drehzahl- und phasenrichtig auf die drehende Reluktanzmaschine 2 geschaltet werden.

## Patentansprüche

1. Verfahren zum Bestimmen einer Rotorfrequenz (f) und/oder eines Rotorwinkels (ϕ) eines Rotors einer Reluktanzmaschine (2), wobei die Reluktanzmaschine (2) einen Stator mit einer Statorwicklung (10) und den Rotor mit einem magnetisch anisotropen Rotorpaket aufweist, durch
- Anlegen einer zeitlichen Sequenz von Spannungspulsen (Uₖ) an die Statorwicklung (10),
- Bestimmen einer sequentiellen Impulsantwort eines in der Statorwicklung (10) fließenden elektrischen Stroms (Iₖ), welcher in Folge der Spannungspulse (Uₖ) und eines daraus sequentiell eingeprägten Flusses (Φₖ) in Folge des magnetisch anisotropen Rotorpaketes entsteht, und
- Bestimmen der Rotorfrequenz (f) und/oder des Rotorwinkels (ϕ) anhand der gemessenen sequentiellen Impulsantwort des elektrischen Stroms (Iₖ) mittels einer Auswerteeinrichtung (3),
**dadurch gekennzeichnet, dass**
- zum Anlegen der zeitlichen Sequenz von Spannungspulsen (Uₖ) mit einem Frequenzumrichter in sequentieller Wiederholung jeweils abwechselnd ein Spannungswert von festem Betrag und fester Richtung und eine Pulssperre ausgegeben werden,
- die Rotorfrequenz (f) und/oder der Rotorwinkel (ϕ) anhand der Sequenz einer Gegensystemkomponente (I'ₖ) des elektrischen Stroms (Iₖ) bestimmt wird, welche den Anteil des elektrischen Stroms (Iₖ) beschreibt, welcher sich in Abhängigkeit von dem Rotorwinkel (ϕ) ändert, und
- zum Bestimmen der Rotorfrequenz (f) und/oder des Rotorwinkels (ϕ) eine Mitsystemkomponente (I₀) des elektrischen Stroms (Iₖ) bestimmt wird, welche den Anteil des elektrischen Stroms (Iₖ) beschreibt, bei welchem eine Änderung in Abhängigkeit vomRotorwinkel(ϕ)unterbleibt.

2. VerfahrennachAnspruch1,**dadurchgekenn- zeichnet**, dass die Rotorfrequenz (f) und/oder der Rotorwinkel (ϕ) zusätzlich anhand einer Geometrie des Rotorpakets bestimmt wird.

3. Verfahren nach einem der vorhergehenden Ansprüche, **dadurch gekennzeichnet, dass** zum Bestimmen der Rotorfrequenz (f) und/oder des Rotorwinkels (ϕ) eine Phase und/oder eine Frequenz des zeitlichen Verlaufs des elektrischen Stroms (Iₖ) mittels einer Phasenregelschleife (4) der Steuereinrichtung (3) aufbereitet wird.

4. Verfahren nach einem der vorhergehenden Ansprüche, **dadurch gekennzeichnet, dass** die Steuereinrichtung (3) zumindest einen Zähler (8) und/oder einen Detektor (9) aufweist, mittels welchem eine Anzahl von Maxima des bestimmten elektrischen Stroms (Iₖ) und/oder ein zeitlicher Abstand zwischen zumindest zwei benachbarten Maxima des zeitlichen Verlaufs des elektrischen Stroms (Iₖ) bestimmt wird.

5. Verfahren nach einem der vorhergehenden Ansprüche, d a - **durch gekennzeichnet**, dass die Rotorfrequenz (f) und/oder der Rotorwinkel (ϕ) bei dem stehenden Rotor oder bei dem sich relativ zu dem Stator drehenden Rotor bestimmt wird.

6. Verfahren nach einem der vorhergehenden Ansprüche, **da- durch gekennzeichnet**, dass ein Umrichter (6) in Abhängigkeit von der bestimmten Rotorfrequenz (f) und/oder des Rotorwinkels (ϕ) auf die Reluktanzmaschine (2) zugeschaltet wird.

7. Steuereinrichtung (3) für einen Umrichter (6) einer Reluktanzmaschine (2), welche zum Durchführen eines Verfahrens nach einem der Ansprüche 1 bis 6 ausgelegt ist.

8. Antriebsanordnung (1) mit einer Reluktanzmaschine (2), einem Umrichter (6), der mit der Reluktanzmaschine (2) elektrische verbunden ist, und einer Steuereinrichtung (3) nach Anspruch 7 zum Ansteuern des Umrichters (6).

## Claims

1. Method for determining a rotor frequency (f) and/or a rotor angle (ϕ) of a rotor of a reluctance machine (2), wherein the reluctance machine (2) comprises a stator having a stator winding (10) and the rotor having a magnetically anisotropic rotor core, by means of
- applying a temporal sequence of voltage pulses (Uₖ) to the stator winding (10),
- determining a sequential pulse response of an electric current (Iₖ) flowing in the stator winding (10), which current (Iₖ) arises as a result of the voltage pulses (Uₖ) and a flux (Φₖ) sequentially impressed therefrom as a result of the magnetically anisotropic rotor core, and
- determining the rotor frequency (f) and/or the rotor angle (ϕ) on the basis of the measured sequential pulse response of the electric current (Iₖ) by means of an evaluating device (3),
**characterised in that**
- for the purpose of applying the temporal sequence of voltage pulses (Uₖ), a voltage value of fixed amount and fixed direction and a pulse block are output alternately in each case in sequential repetition using a frequency converter,
- the rotor frequency (f) and/or the rotor angle (ϕ) is determined on the basis of the sequence of a negative-phase component (I'ₖ) of the electric current (Iₖ), which describes that part of the electric current (Iₖ) which changes as a function of the rotor angle (ϕ), and
- for the purpose of determining the rotor frequency (f) and/or the rotor angle (ϕ), a positive-phase component (I₀) of the electric current (Iₖ) is determined, which describes that part of the electric current (Iₖ) which does not undergo change as a function of the rotor angle (ϕ).

2. Method according to claim 1, **characterised in that** the rotor frequency (f) and/or the rotor angle (ϕ) is also determined on the basis of a geometry of the rotor core.

3. Method according to one of the preceding claims, **characterised in that** for the purpose of determining the rotor frequency (f) and/or the rotor angle (ϕ), a phase and/or a frequency of the temporal course of the electric current (Iₖ) is prepared by means of a phase control loop (4) of the control device (3).

4. Method according to one of the preceding claims, **characterised in that** the control device (3) has at least one meter (8) and/or one detector (9), by means of a which a number of maxima of the determined electric current (Iₖ) and/or a time interval between at least two adjacent maxima of the temporal course of the electric current (Iₖ) is determined.

5. Method according to one of the preceding claims, **characterised in that** the rotor frequency (f) and/or the rotor angle (ϕ) is determined when the rotor is stationary or when the rotor is rotating relative to the stator.

6. Method according to one of the preceding claims, **characterised in that** a converter (6) is connected to the reluctance machine (2) in accordance with the rotor frequency (f) and/or the rotor angle (ϕ) that has been determined.

7. Control device (3) for a converter (6) of a reluctance machine (2), which control device (3) is configured for the purpose of performing a method according to one of claims 1 to 6.

8. Drive assembly (1) comprising a reluctance machine (2), a converter (6) which is electrically connected to the reluctance machine (2), and a control device (3) according to claim 7 for controlling the converter (6).

## Revendications

1. Procédé de détermination d'une fréquence (f) et/ou d'un angle (ϕ) d'un rotor d'une machine (2) à réluctance, la machine (2) à réluctance ayant un stator à enroulement (10) statorique et le rotor ayant un paquet rotorique anisotrope magnétiquement, par
- application d'une séquence temporelle d'impulsions (Uₖ) de tension à l'enroulement (10) statorique,
- détermination d'une réponse impulsionnelle séquentielle d'un courant (Iₖ) électrique passant dans l'enroulement (10) statorique, qui se crée en raison des impulsions (Uₖ) de tension et d'un flux (Φₖ) appliqué séquentiellement qui s'ensuit en raison du paquet rotorique anisotrope magnétiquement et
- détermination de la fréquence (f) du rotor et/ou de l'angle (ϕ) du rotor, à l'aide de la réponse impultionnelle séquentielle mesurée du courant (Iₖ) électrique au moyen d'un dispositif (3) d'exploitation,
**caractérisé en ce que**
- pour appliquer la séquence temporelle d'impulsions (Uₖ) de tension, on émet, par un convertisseur de fréquence, en répétition séquentielle, respectivement en alternance, une valeur de tension de valeur absolue fixe et de sens fixe et un blocage d'impulsion,
- on détermine la fréquence (f) du rotor et/ou l'angle (ϕ) du rotor à l'aide de la séquence d'une composante (I'ₖ) de système inverse du courant (Iₖ) électrique, qui décrit la proportion du courant (Iₖ) électrique qui se modifie en fonction de l'angle (ϕ) du rotor et
- pour déterminer la fréquence (f) du rotor et/ou l'angle (ϕ) du rotor, on détermine une composante (I₀) de système direct du courant (Iₖ) électrique, qui décrit la proportion du courant (Iₖ) électrique, pour laquelle une variation en fonction de l'angle (ϕ) du rotor ne se produit pas.

2. Procédé suivant la revendication 1, **caractérisé en ce que** l'on détermine la fréquence (f) du rotor et/ou l'angle (ϕ) du rotor à l'aide en outre d'une géométrie du paquet rotorique.

3. Procédé suivant l'une des revendications précédentes, **caractérisé en ce que**, pour déterminer la fréquence (f) du rotor et/ou l'angle (ϕ) du rotor, on traite une phase et/ou une fréquence de la courbe du courant (Iₖ) électrique en fonction du temps, au moyen d'une boucle (4) de régulation de phase du dispositif (3) de commande.

4. Procédé suivant l'une des revendications précédentes, **caractérisé en ce que** le dispositif (3) de commande a au moins un compteur (8) et/ou un détecteur (9) au moyen duquel on détermine un nombre de maximum du courant (Iₖ) électrique déterminé et/ou une distance dans le temps entre au moins deux maximum voisins de la courbe du courant (Iₖ) électrique en fonction du temps.

5. Procédé suivant l'une des revendications précédentes, **caractérisé en ce que** l'on détermine la fréquence (f) du rotor et/ou l'angle (ϕ) du rotor alors que le rotor est fixe ou alors qu'il tourne par rapport au stator.

6. Procédé suivant l'une des revendications précédentes, **caractérisé en ce que** l'on branche un convertisseur (6) sur la machine (2) à réluctance en fonction de la fréquence (f) du rotor et/ou de l'angle (ϕ) du rotor, qui a été déterminé.

7. Dispositif (3) de commande d'un convertisseur (6) d'une machine (2) à réluctance, qui est conçu pour effectuer un procédé suivant l'une des revendications 1 à 6.

8. Agencement (1) d'entraînement, comprenant une machine (2) à réluctance, un convertisseur (6), qui est relié électriquement à la machine (2) à réluctance, et un dispositif (3) de commande suivant la revendication 7 pour commander le convertisseur (6).
